(19) Europäisches Patentamt
European Patent Office
Office européen des brevets

(11) **EP 2 495 607 A2**

(12) **EUROPEAN PATENT APPLICATION**
published in accordance with Art. 153(4) EPC

(43) Date of publication:
**05.09.2012 Bulletin 2012/36**

(51) Int Cl.:
***G02F 1/01*** *(2006.01)*

(21) Application number: **11744287.1**

(22) Date of filing: **14.04.2011**

(86) International application number:
**PCT/CN2011/072799**

(87) International publication number:
**WO 2011/100929 (25.08.2011 Gazette 2011/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Huawei Technologies Co., Ltd.**
**Shenzhen, Guangdong 518129 (CN)**

(72) Inventors:
• **QI, Ming**
**Shenzhen**
**Guangdong 518129 (CN)**

• **XIONG, Wei**
**Shenzhen**
**Guangdong 518129 (CN)**
• **ZHANG, Dixuan**
**Shenzhen**
**Guangdong 518129 (CN)**
• **WU, Shuangyuan**
**Shenzhen**
**Guangdong 518129 (CN)**

(74) Representative: **Epping - Hermann - Fischer**
**Patentanwaltsgesellschaft mbH**
**Ridlerstrasse 55**
**80339 München (DE)**

(54) **OPTICAL MODULATION METHOD AND SYSTEM**

(57) The present invention provides an optical modulation method and system. The method includes: loading a first dither signal on an amplitude of an input data signal; loading a second dither signal on a bias voltage; and according to the bias voltage loaded with the second dither signal, obtaining a modulation signal according to the data signal whose amplitude is loaded with the first dither signal, and outputting the modulation signal as an output optical signal, where the first dither signal and the second dither signal are signals of the same frequency and the same phase, and a ratio of amplitudes of the signals is determined according to a tracking error, so that a feedback signal obtained according to the modulation signal is locked to a required bias point. In the embodiments of the present invention, lock precision may be improved.

Load a first dither signal on an amplitude of an input data signal — 11

Load a second dither signal on a bias voltage — 12

According to the bias voltage loaded with the second dither signal, obtain a modulation signal by loading the data signal, the amplitude of which is loaded with the first dither signal, on an input optical signal, and output the modulation signal as an output optical signal — 13

FIG. 1

Printed by Jouve, 75001 PARIS (FR)

**Description**

**FIELD OF THE INVENTION**

The present invention relates to the field of optical communications technologies, and in particular, to an optical modulation method and system.

**BACKGROUND OF THE INVENTION**

In an optical network, a modulation format needs to be adopted to transmit an optical signal, and a key component for generating a series of modulation formats is an optical modulator, for example, an MZ modulator. The MZ modulator has a modulation curve with a sinusoidal shape, and by loading a data signal to different bias points of an optical input signal, different modulation formats may be obtained. A bias point is usually a null point or a quad point. To maintain stability of long term working, the bias point of the MZ modulator is usually controlled in real time, so that the bias point remains stable and unchanged.

In the prior art, generally a bias is implemented at the quad point through dither loading on the amplitude of a data signal (or referred to as an RF), and a bias is implemented at the null point through dither loading on a bias voltage (or referred to as a bias). The implementation principles of the Quad point locking and the null point locking are both searching for a minimum point of a feedback signal. A change of average optical power is adopted as the feedback signal, the average optical power changes periodically with changing of the bias point, and the feedback signal is zero at the quad point or at the null point. However, an optical modulator generally adopts a PD to detect the change of the average optical power, and generates a photocurrent as the feedback signal. In fact, a change of the photocurrent of the optical modulator has a particular deviation with an actual modulation curve, where the deviation is a tracking error (tracking error). Due to the existence of the tracking error, a particular deviation exists between a lock point and a correct target.

To solve the problem caused by the tracking error, a method of increasing a pull deviator may be adopted in the prior art. Instead of searching for a zero point of the feedback signal, this method is adding a pull deviator in the feedback signal, and by searching for a lock point at which the magnitude of the feedback signal is the pull deviator, compensating for a detection deviation caused by the modulator, so as to lock at a correct bias point. However, since a required pull deviator is different when the temperature changes, lock precision is surely influenced in the case in which the temperature changes.

**SUMMARY OF THE INVENTION**

Embodiments of the present invention provide an optical modulation method and system, so as to improve lock precision.

An embodiment of the present invention provides an optical modulation method, which includes:

loading a first dither signal on an amplitude of an input data signal;
loading a second dither signal on a bias voltage; and
according to the bias voltage loaded with the second dither signal, obtaining a modulation signal by loading the data signal, the amplitude of which is loaded with the first dither signal, on an input optical signal, and outputting the modulation signal as an output optical signal, where
the first dither signal and the second dither signal are signals of the same frequency and the same phase, and a ratio of amplitudes of the signals is determined according to a tracking error, so that a feedback signal obtained according to the modulation signal is locked to a required bias point.

An embodiment of the present invention provides an optical modulation system, which includes:

a first dither loading module, configured to load a first dither signal on an amplitude of an input data signal;
a second dither loading module, configured to load a second dither signal on a bias voltage; and
an optical modulator, configured to, according to the bias voltage loaded with the second dither signal, obtain a modulation signal by loading the data signal, the amplitude of which is loaded with the first dither signal, on an input optical signal, and output the modulation signal as an output optical signal, where
the first dither signal and the second dither signal are signals of the same frequency and the same phase, and a ratio of amplitudes of the signals is determined according to a tracking error, so that a feedback signal obtained according to the modulation signal is locked to a required bias point.

According to the foregoing technical solutions, in the embodiments of the present invention, through dither loading performed on the amplitude of the data signal and the bias voltage and according to the two dither signals, the feedback signal obtained according to the output optical signal is locked to the required bias point, and the bias point is locked to a target position, thereby improving lock precision.

**BRIEF DESCRIPTION OF THE DRAWINGS**

To illustrate the technical solutions according to the embodiments of the present invention more clearly, the accompanying drawings for describing the embodiments are introduced briefly in the following. Apparently, the accompanying drawings in the following description are only some embodiments of the present invention, and persons of ordinary skill in the art can derive other drawings from the accompanying drawings without creative efforts.
FIG. 1 is a schematic flow chart of a method according to a first embodiment of the present invention;
FIG. 2 is a schematic structural diagram of a system according to a second embodiment of the present invention;
FIG. 3 is a schematic structural diagram of a system according to a third embodiment of the present invention; and
FIG. 4 is a schematic diagram of a feedback signal according to an embodiment of the present invention.

**DETAILED DESCRIPTION OF THE EMBODIMENTS**

In order to make the objectives, technical solutions, and advantages of the present invention more comprehensible, the technical solutions according to embodiments of the present invention are clearly and completely described in the following with reference to the accompanying drawings. Apparently, the embodiments in the following description are merely a part rather than all of the embodiments of the present invention. All other embodiments obtained by persons of ordinary skill in the art based on the embodiments of the present invention without creative effects shall fall within the protection scope of the present invention.

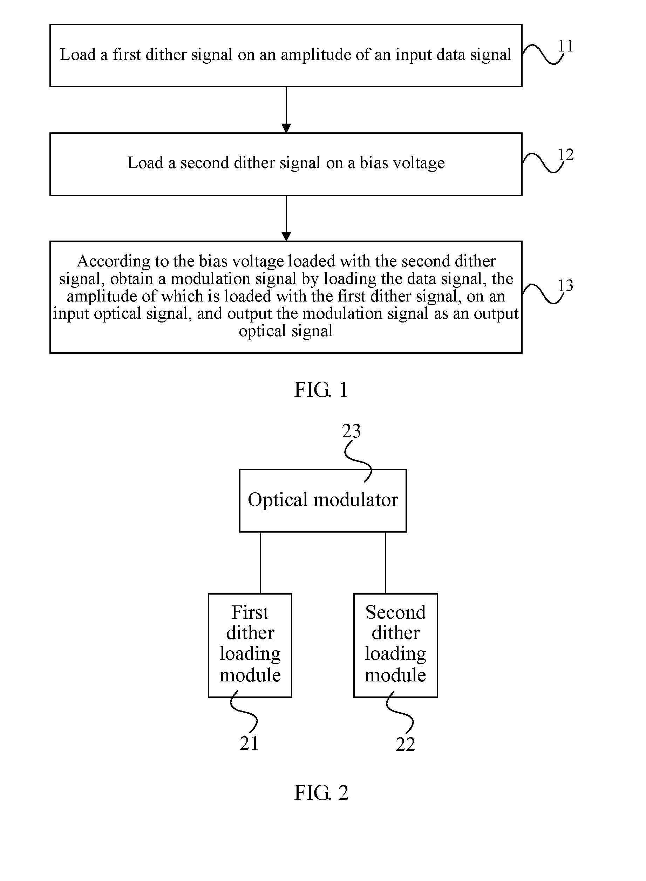

FIG. 1 is a flow chart of a method according to a first embodiment of the present invention, which includes the following steps:
Step 11: Load a first dither signal on an amplitude of an input data signal.
For example, load the first dither signal on the amplitude of the data signal by using a multiplier.
Step 12: Load a second dither signal on a bias voltage.
For example, load the second dither signal on the bias voltage by using an adder.
The first dither signal and the second dither signal are signals of the same frequency and the same phase, and a ratio of amplitudes of the signals is determined according to a tracking error, so that a feedback signal obtained according to the modulation signal is locked to a required bias point.
The first dither signal and the second dither signal may be obtained by performing different types of amplification processing on a source dither signal. For example, this embodiment may also include: obtaining a source dither signal; obtaining the first dither signal after performing amplification processing on the source dither signal by using a first amplifier; and obtaining the second dither signal after performing amplification processing on the source dither signal by using a second amplifier, where a ratio of an amplitude of the first amplifier to that of the second amplifier is the ratio of the amplitude of the first dither signal to that of the second dither signal. A ratio of an amplification coefficient of the first amplifier to that of the second amplifier may be determined as follows: determining a tracking error, and determining the ratio of the amplification coefficient of the first amplifier to that of the second amplifier according to the tracking error.
Step 13: According to the bias voltage loaded with the second dither signal, obtain a modulation signal by loading the data signal, the amplitude of which is loaded with the first dither signal, on an input optical signal, and output the modulation signal as an output optical signal.
Specifically, an MZ modulator modulates the input optical signal by using the data signal to obtain the modulation signal. The data signal may be modulated at different positions of the modulation signal, a position point of the data signal corresponding to the modulation signal is called a bias point, and different modulation formats are obtained corresponding to different bias points. The bias voltage is used to control the forgoing bias point. For example, when the bias voltage is different, the bias point is different.
Further, after obtaining the modulation signal, the MZ modulator outputs the modulation signal, that is, the output optical signal. In addition, photoelectric detection may be performed on the modulation signal in the MZ modulator, to convert the optical signal into an electrical signal for outputting, and the output electrical signal is the feedback signal. Moreover, the bias voltage may be obtained according to the feedback signal, and a new feedback signal may further be obtained according to the bias voltage. Through the closed-loop processing, real-time processing of the MZ modulator may be implemented until a stable output optical signal is output.
Therefore, this embodiment may also include: obtaining an updated bias voltage according to the feedback signal, and obtaining a new feedback signal according to the updated bias voltage until the output optical signal reaches a preset stable state.

In the prior art, if dither loading is performed only on the amplitude of the data signal, the bias point is a quad point, and if dither loading is performed only on the bias voltage, the bias point is a null point. However, if dither loading is performed only on the amplitude of the data signal or only on the bias voltage, a tracking error may exist, and lock precision is reduced. In order to increase the precision, in this embodiment of the present invention, dither loading is performed on both the amplitude of the data signal and the bias voltage, and a specific ratio of the amplitudes of the dither signals is adopted to implement correct locking of the bias point.

FIG. 2 is a schematic structural diagram of a system according to a second embodiment of the present invention, which includes: a first dither loading module 21, a second dither loading module 22, and an optical modulator 23. The first dither loading module 21 is configured to load a first dither signal on an amplitude of an input data signal. The second dither loading module 22 is configured to load a second dither signal on a bias voltage. The optical modulator 23 is configured to, according to the bias voltage loaded with the second dither signal, obtain a modulation signal by loading the data signal, the amplitude of which is loaded with the first dither signal, on an input optical signal, and output the modulation signal as an output optical signal. The first dither signal and the second dither signal are signals of the same frequency and the same phase, and a ratio of amplitudes of the signals is determined according to a tracking error, so that a feedback signal obtained according to the modulation signal is locked to a required bias point.

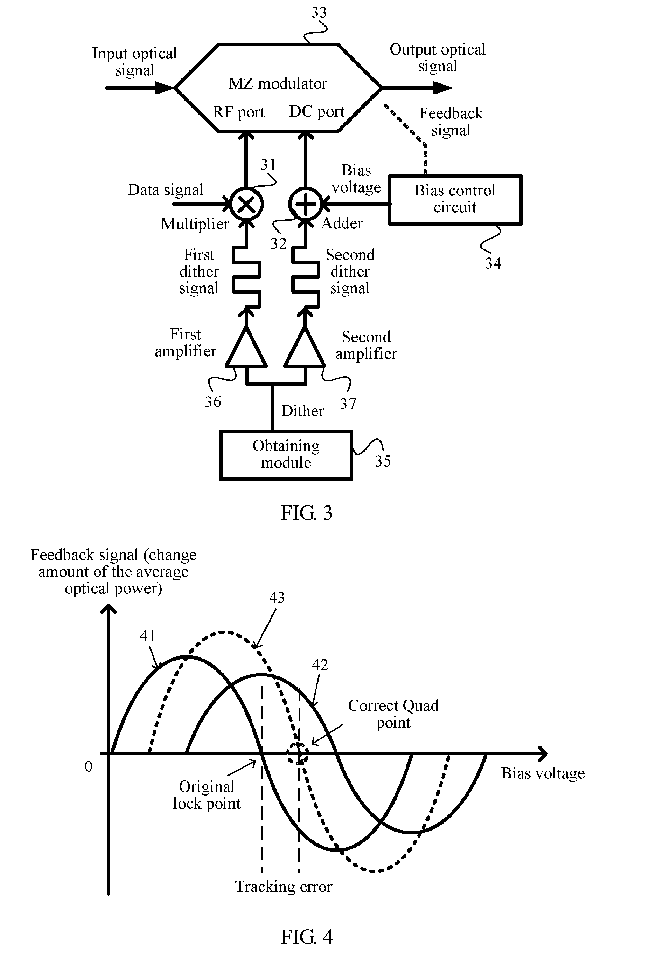

FIG. 3 is a schematic structural diagram of a system according to a third embodiment of the present invention. In this embodiment, it is taken as an example that an optical modulator is an MZ modulator, a first dither loading module is a multiplier, a second dither loading module is an adder, and a first dither signal and a second dither signal are obtained after performing different types of amplification on a source dither signal respectively.

This embodiment includes: a multiplier 31, an adder 32, an MZ modulator 33, a bias voltage controller (Bias control circuit) 34, a first amplifier 36, a second amplifier 37, and an obtaining module 35.

The obtaining module 35 is configured to obtain the source dither signal. The first amplifier 36 is configured to obtain the first dither signal after performing amplification processing on the source dither signal. The multiplier 31 is configured to load the first dither signal on an amplitude of an input data signal. The second amplifier 37 is configured to obtain the second dither signal after performing amplification processing on the source dither signal. The adder 32 is configured to load the second dither signal on a bias voltage. The MZ modulator 33 is configured to, according to the bias voltage loaded with the second dither signal, obtain an output optical signal by loading the data signal, the amplitude of which is loaded with the first dither signal, on an input optical signal. In addition, the MZ modulator may also be configured to perform photoelectric conversion on the output optical signal to obtain a feedback signal. This embodiment may also include the bias voltage controller 34, where the bias voltage controller 34 is configured to obtain an updated bias voltage according to the feedback signal, and obtain a new feedback signal according to the updated bias voltage until the output optical signal reaches a preset stable state.

The processing principles of the MZ modulator, the adder, the multiplier and the bias voltage controller may be implemented by adopting the prior art.

In this embodiment of the present invention, lock precision of the bias point may be implemented by controlling a ratio of an amplitude of the first amplifier to that of the second amplifier, where the ratio of the amplitude of the first amplifier and that of the second amplifier may be calculated as follows.

FIG. 4 is a schematic diagram of a feedback signal according to an embodiment of the present invention. To implement lock precision of a bias point, a feedback signal 43 in FIG. 4 needs to be obtained.

In order to obtain the feedback signal 43, an original data signal and an original bias voltage may be processed. The principle is as follows: If dither loading is performed only on an amplitude of the data signal, a first feedback signal 41 corresponding to the data signal may be locked to an original lock point, and due to existence of a tracking error, a tracing error (Tracing error) E to a target bias point may exist. On the contrary, if dither loading is performed only on the bias voltage, a second feedback signal 42 may be generated, and the second feedback signal 42 is a pi/2 period away from the first feedback signal 41.

Since the amplitude of the data signal and the bias voltage are both processed in this embodiment of the present invention, in this embodiment of the present invention, the final feedback signal 43 is a result of superposing the original feedback signals that are obtained by performing dither loading only on the amplitude of the data signal or only on the bias voltage, that is, the first feedback signal 41 and the second feedback signal 42. Due to the superposition of the two feedback signals, a position of a null point of the feedback signal 43 offsets and the lock point offsets accordingly with the offset position of the null point. If the offset is controlled to be the tracking error, the bias point may be located at a correct target bias point. It should be understood that, the position of a theoretical bias point is known, and therefore the foregoing tracking error is also known.

The foregoing theoretical analysis is as follows:

A function form of the first feedback signal corresponding to the dither loading performed on the amplitude of the data signal is: $f(v) = A * \sin(\dfrac{2\pi}{Vpi} * v)$ , where A is the amplitude of the first dither signal, *Vpi* is a characteristic parameter, and v is the bias voltage;

a function form of the second feedback signal corresponding to the dither loading performed on the bias voltage is:

$f'(v) = B * \sin(\dfrac{2\pi}{Vpi} * v + \dfrac{\pi}{2})$ , where B is the amplitude of the second dither signal, *Vpi* is the characteristic parameter, and v is the bias voltage;

the feedback signal obtained by superposing the two feedback signals is:

$$f(v) + f'(v) = A * \sin(\dfrac{2\pi}{Vpi} * v) + B * \sin(\dfrac{2\pi}{Vpi} * v + \dfrac{\pi}{2}) = C * \sin(w * v + \Phi),$$ where

$\Phi$ is an initial phase of the feedback signal after the superposition, and $\Phi = \arctan(B / A)$.

According to the foregoing formulas, $\Phi$ determines the position of the null point of the resultant feedback signal, and therefore the resultant feedback signal may be moved left and right by changing the relative magnitudes and polarities of the two dither signals, so that the bias point is locked to any position. For example, in order to lock the bias point to the quad point, $\Phi$ may be made equal to the tracking error and a ratio B/A of the amplitudes of the two dither signals is obtained through calculation, that is, $\Phi = \arctan (B/A)$ = tracking error. Through this formula, the ratio of the amplitude of the first dither signal to that of the second dither signal may be obtained, and afterward a ratio of an amplitude of the second amplifier to that of the first amplifier is set to B/A.
The foregoing principle may be applied to the quad point bias and the null point bias. In addition, by controlling the ratio of an amplitude of the first amplifier to that of the second amplifier, the bias point of the modulator may also be locked to any target position. Through the foregoing process, precision of the position of the lock point may be improved. Moreover, when a temperature changes, the first feedback signal and the second feedback signal may be influenced to the same extent at the same time, that is, a ratio value of B/A is unchanged. Therefore, the lock point does not offset with the change of the temperature.
It may be understood that the relative characteristics of the foregoing methods and devices may be referred to each other. In addition, the "first" and the "second" in the foregoing embodiments are used to distinguish each embodiment, and do not imply the preference of each embodiment.
Persons of ordinary skill in the art should understand that all or a part of the steps of the methods according to the embodiments of the present invention may be implemented by a program instructing relevant hardware. The program may be stored in a computer readable storage medium. When the program is run, the steps of the method according to the embodiments of the present invention are performed. The storage medium includes any medium that is capable of storing program codes, such as a ROM, a RAM, a magnetic disk or an optical disk.
Finally, it should be noted that the foregoing embodiments are merely provided for describing the technical solutions of the present invention, but not intended to limit the present invention. It should be understood by persons of ordinary skill in the art that although the present invention has been described in detail with reference to the foregoing embodiments, modifications may be made to the technical solutions described in the foregoing embodiments, or equivalent replacements may be made to some technical features in the technical solutions, as long as such modifications or replacements do not cause the essence of the corresponding technical solutions to depart from the spirit and scope of the present invention.

**Claims**

1.  An optical modulation method, comprising:

    loading a first dither signal on an amplitude of an input data signal;
    loading a second dither signal on a bias voltage; and
    according to the bias voltage loaded with the second dither signal, obtaining a modulation signal by loading the data signal, the amplitude of which is loaded with the first dither signal, on an input optical signal, and outputting the modulation signal as an output optical signal, wherein
the first dither signal and the second dither signal are signals of the same frequency and the same phase, and a ratio of amplitudes of the signals is determined according to a tracking error, so that a feedback signal obtained according to the modulation signal is locked to a required bias point.

2. The method according to claim 1, further comprising:

obtaining a source dither signal;
obtaining the first dither signal after performing amplification processing on the source dither signal by using a first amplifier; and
obtaining the second dither signal after performing amplification processing on the source dither signal by using a second amplifier, wherein
a ratio of an amplitude of the first amplifier to that of the second amplifier is the ratio of the amplitude of the first dither signal to that of the second dither signal.

3. The method according to claim 2, further comprising:

determining a tracking error, and determining a ratio of an amplification coefficient of the first amplifier to that of the second amplifier according to the tracking error.

4. The method according to claim 1, further comprising:

obtaining an updated bias voltage according to the feedback signal, and obtaining a new feedback signal according to the updated bias voltage until the output optical signal reaches a preset stable state.

5. The method according to claim 1, wherein the first dither signal is loaded on the amplitude of the data signal by using a multiplier, and the second dither signal is loaded on the bias voltage by using an adder.

6. An optical modulation system, comprising:

a first dither loading module, configured to load a first dither signal on an amplitude of an input data signal;
a second dither loading module, configured to load a second dither signal on a bias voltage; and
an optical modulator, configured to, according to the bias voltage loaded with the second dither signal, obtain a modulation signal by loading the data signal, the amplitude of which is loaded with the first dither signal, on an input optical signal, and output the modulation signal as an output optical signal, wherein
the first dither signal and the second dither signal are signals of the same frequency and the same phase, and a ratio of amplitudes of the signals is determined according to a tracking error, so that a feedback signal obtained according to the modulation signal is locked to a required bias point.

7. The system according to claim 6, further comprising:

an obtaining module, configured to obtain a source dither signal;
a first amplifier, configured to obtain the first dither signal after performing amplification processing on the source dither signal; and
a second amplifier, configured to obtain the second dither signal after performing amplification processing on the source dither signal by using the second amplifier, wherein
a ratio of an amplitude of the first amplifier to that of the second amplifier is the ratio of the amplitude of the first dither signal to that of the second dither signal.

8. The system according to claim 6 or 7, wherein the first dither loading module is a multiplier, and the second dither loading module is an adder.

9. The system according to claim 6, further comprising:

a bias voltage controller, configured to obtain an updated bias voltage according to the feedback signal, and obtain a new feedback signal according to the updated bias voltage until the output optical signal reaches a preset stable state.

| Load a first dither signal on an amplitude of an input data signal | 11 |

↓

| Load a second dither signal on a bias voltage | 12 |

↓

| According to the bias voltage loaded with the second dither signal, obtain a modulation signal by loading the data signal, the amplitude of which is loaded with the first dither signal, on an input optical signal, and output the modulation signal as an output optical signal | 13 |

FIG. 1

23

| Optical modulator |

| First dither loading module | Second dither loading module |

21            22

FIG. 2

FIG. 3

FIG. 4